(19) Europäisches Patentamt

European Patent Office

Office européen des brevets

(11) EP 1 245 543 A2

(12) **EUROPEAN PATENT APPLICATION**

(43) Date of publication:
02.10.2002 Bulletin 2002/40

(51) Int Cl.7: **C03B 37/012**

(21) Application number: 02007203.9

(22) Date of filing: 27.03.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: 30.03.2001 JP 2001101090

(71) Applicant: **Sumitomo Electric Industries, Ltd.
Osaka-shi, Osaka 541-0041 (JP)**

(72) Inventors:
• **Yokoyama, Yoshio, Yokohama Works
  Yokohama-shi, Kanagawa 244-8588 (JP)**
• **Ooishi, Toshihiro, Yokohama Works
  Yokohama-shi, Kanagawa 244-8588 (JP)**
• **Ohga,Yuichi, Yokohama Works
  Yokohama-shi, Kanagawa 244-8588 (JP)**

(74) Representative: **HOFFMANN - EITLE
Patent- und Rechtsanwälte
Arabellastrasse 4
81925 München (DE)**

(54) **Method and apparatus for elongating optical fiber preform**

(57)    In a elongating process, diameter gauges 20, 25 are provided at two locations of upstream measurement position P1 and downstream measurement position P2 which are in a taper portion 1b of an optical fiber preform 1, and fixed target diameters D10, D20 are set for the respective positions. Then a feed speed V1 of starting preform 1a is controlled based on a deviation (D1 - D10) of measured diameter D1 at the measurement position P1, while a take-up speed V2 of elongated preform 1c is controlled based on a deviation (D2 - D20) of measured diameter D2 at the measurement position P2. This decreases a time lag of control over the outside diameter of the elongated preform 1c and it thus becomes feasible to control the outside diameter in good response and with accuracy. Accordingly, an optical fiber preform elongating method and elongating apparatus are substantiated with improved elongating accuracy of the optical fiber preform and with improved productivity thereof.

Fig.1

**Description**

BACKGROUND OF THE INVENTION

Field of the Invention

The present invention relates to an optical fiber preform elongating method and elongating apparatus for heating and softening an optical fiber preform and elongating the optical fiber preform into a desired outside diameter.

Related Background Art

In recent years, in order to enhance the productivity of optical fibers and optical fiber preforms as base materials thereof, the optical fiber preforms have increased their size, and the elongating process to elongate the preform into a desired outside diameter is of increasing importance. Particularly, for elongating of such optical fiber preforms, there are desires to enhance the elongating accuracy thereof, i.e., the accuracy of the outside diameter of elongated preforms resulting from the elongating of starting preforms.

The elongating process of optical fiber preform is carried out by heating and softening a starting preform by heating means and elongating the softened preform into a desired diameter. The heating means for heating and softening the starting preform is either of burner flame with fuel gas of oxygen, hydrogen, methane, or the like, an electric furnace with a resistor heater or the like, and so on.

In particular, where the optical fiber preform becomes large over the outside diameter of 100 mm, it will be difficult to elongate the preform by heating with burner flame. For this reason, it is common practice to elongate the preform through the use of the electric furnace with the resistor heater or the like, for processing such large fiber preforms.

There are proposals of providing a plurality of diameter gauges for the taper part of the preform and controlling the outside diameter of the elongated preform, for example, based on variation of outside diameters measured thereby and variation of the taper shape (cf. Japanese Patent Applications Laid-Open No. H05-147971 and Laid-Open No. H08-91861).

SUMMARY OF THE INVENTION

The present invention is to provide an optical fiber preform elongating method and elongating apparatus successfully achieving improvement in the elongating accuracy of the optical fiber preform and improvement in the productivity thereof.

An optical fiber preform elongating method according to the present invention is adapted to heat and soften one end of a starting preform fed from preform feed means, by heating means, elongate the softened preform into a desired outside diameter, and take up the resultant elongated preform by preform take-up means, which comprises: (a) setting an upstream measurement position included in a taper portion between the starting preform and the elongated preform and in which outside diameters vary along a longitudinal direction, and setting a downstream measurement position included in the taper portion and located downstream of the upstream measurement position in the longitudinal direction; (b) comparing a measured upstream diameter of the taper portion at the upstream measurement position with a set target upstream diameter and controlling a feed speed of the starting preform from the preform feed means, based on a deviation between the measured diameter and the target diameter; and (c) comparing a measured downstream diameter of the taper portion at the downstream measurement position with a set target downstream diameter and controlling a take-up speed of the elongated preform at the preform take-up means, based on a deviation between the measured diameter and the target diameter.

Here, as for the upstream side and the downstream side in the optical fiber preform elongating process, the upstream side is the side with the preform feed means for feeding the starting preform, and the downstream side is the side with the preform take-up means for taking up the elongated preform.

An optical fiber preform elongating apparatus according to the present invention is adapted to heat and soften one end of a starting preform fed from preform feed means, by heating means, elongate the softened preform into a desired outside diameter, and take up the resultant elongated preform by preform take-up means, which comprises: (1) upstream diameter measuring means for, for a taper portion between the starting preform and the elongated preform where outside diameters vary along a longitudinal direction, measuring an upstream outside diameter of the taper portion at an upstream measurement position included in the taper portion; (2) downstream diameter measuring means for measuring a downstream outside diameter of the taper portion at a downstream measurement position included in the taper portion and located downstream of the upstream measurement position in the longitudinal direction; (3) feed speed control means for comparing a measured upstream diameter of the taper portion at the upstream measurement position with a set target upstream diameter and controlling a feed speed of the starting preform from the preform feed means, based on a deviation between the measured diameter and the target diameter; and (4) take-up speed control means for comparing a measured downstream diameter of the taper portion at the downstream measurement position with a set target downstream diameter and controlling a take-up speed of the elongated preform at the preform take-up means, based on a deviation between the measured diameter and the target diameter.

In the optical fiber preform elongating method and elongating apparatus as described above, for the taper portion of the preform in the elongating process, the target outside diameters are set at the two locations, the upstream measurement position on the upstream side and the downstream measurement position on the downstream side. Then the feed speed of the preform upstream is controlled using the deviation of the measured diameter at the upstream measurement position from the target diameter, and the take-up speed of the preform downstream is controlled using the deviation of the measured diameter at the downstream measurement position from the target diameter.

In this way, the fixed target diameters are given at the respective measurement positions and the upstream and downstream diameter measurements are combined with the controls of the preform feed speed and take-up speed as described above, whereby it becomes feasible to decrease the time lag of control over the outside diameter of the elongated preform and control the outside diameter thereof with accuracy.

Further, .in the above-stated method and apparatus, execution of an extra step, e.g., accurate reelongating with a lathe in a post-step, is not required in order to improve the elongating accuracy. This permits the preform to be elongated with satisfactory elongating accuracy even if the size of the optical fiber preform is increased for the purpose of enhancing the productivity of optical fibers and optical fiber preforms. Since the production cost of the optical fiber preforms is reduced, it becomes feasible to enhance the productivity thereof effectively.

## BRIEF DESCRIPTION OF THE DRAWINGS

Fig. 1 is a block diagram schematically showing an embodiment of the optical fiber preform elongating apparatus.

Fig. 2 is a graph showing variation of outside diameters in the taper portion of an optical fiber preform.

Figs. 3A to 3C are graphs showing correlations between upstream diameters and downstream diameters.

Fig. 4 is a graph showing a correlation between downstream diameters and outside diameters of the starting preform.

## DESCRIPTION OF THE PREFERRED EMBODIMENTS

The preferred embodiments of the optical fiber preform elongating method and elongating apparatus according to the present invention will be described below in detail with reference to the drawings. The same or similar elements will be denoted by the same reference symbols throughout the description of the drawings and redundant description will be omitted. It is also noted that dimensional ratios in the drawings do not always agree with those in the description.

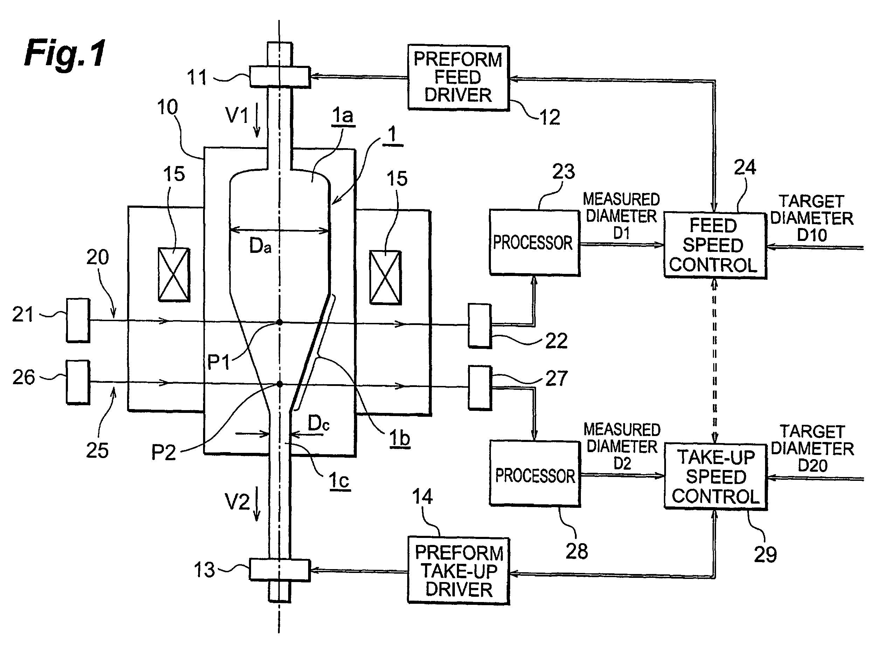

The structure of the elongating apparatus shown in Fig. 1 will be described below together with the optical fiber preform elongating method according to the present invention, which is carried out using the elongating apparatus.

The elongating apparatus of the present embodiment is provided with a heating furnace 10 for housing an optical fiber preform 1 as an object to be elongated and for heating the preform. Above the heating furnace 10, there is provided an upper chuck 11 being a rotary chuck for supporting the optical fiber preform 1 from the top. Below the heating furnace 10, there is provided a lower chuck 13 being a rotary chuck for supporting the optical fiber preform 1 from the bottom.

The heating furnace 10 is an electric furnace in the present embodiment, in which a heater 15 is installed as heating means for heating and softening one end of a starting preform 1a being the optical fiber preform as an object to be elongated. The starting preform 1a is heated and softened by this heater 15 and elongated into a desired outside diameter to yield a elongated preform 1c. During this elongating process, a part between the starting preform 1a and the elongated preform 1c becomes a taper portion 1b in which outside diameters vary along the longitudinal direction of the preform 1 (a chain line in the drawing).

The feeding of the starting preform 1a at the upper chuck 11 is under drive control of a preform feed driver 12. The upper chuck 11 and preform feed driver 12 constitute preform feed means for feeding the starting preform 1a at a predetermined feed speed. The take-up of the elongated preform 1c at the lower chuck 13 is under drive control of a preform take-up driver 14. The lower chuck 13 and preform take-up driver 14 constitute preform take-up means for taking up the elongated preform 1c at a predetermined take-up speed.

For the optical fiber preform 1 elongated while being moved along the longitudinal direction by the foregoing preform feed means and preform take-up means, positions for measurement of outside diameters are set at two locations, an upstream measurement position P1 and a downstream measurement position P2 in the longitudinal direction of the preform.

The upstream measurement position P1 is defined at a position included in the taper portion 1b of the preform 1. The downstream measurement position P2 is defined at a position included in the taper portion 1b of the preform and located downstream of the upstream measurement position P1. The elongating apparatus of the present embodiment is configured to control the feed speed of the starting preform 1a at the preform feed means and the take-up speed of the elongated preform 1c at the preform take-up means, based on outside diameters of the preform 1 in the taper portion 1b measured at the respective measurement positions P1 and P2, and, thereby, control the outside diameter so that the outside diameter of the elongated preform 1c resulting from the elongating of the starting preform 1a becomes substantially constant.

An upstream diameter gauge 20 for measuring the outside diameter (upstream diameter) of the taper portion 1b at the position P1 is installed at the upstream measurement position P1. The upstream diameter gauge 20 is comprised of a light emitting device 21 such as a laser beam source or the like, and a light receiving device 22 placed on the opposite side to the light emitting device 21 with the taper portion 1b in between. An output signal from the light receiving device 22 is supplied to a processing unit 23. Then the processing unit 23 calculates a measured upstream diameter D1 as a measured value of the upstream diameter of the taper portion 1b at the upstream measurement position P1, based on the signal from the light receiving device 22.

The measured upstream diameter D1 calculated at the processing unit 23 is further fed into a feed speed controller 24. In this feed speed controller 24, a target upstream diameter D10 is preliminarily set as a target outside diameter of the taper portion 1b at the upstream measurement position P1 on the other hand. The feed speed controller 24 compares the measured upstream diameter D1 with the target upstream diameter D10 thus set and provides instructions to the preform feed driver 12, based on the deviation (D1 - D10), thereby controlling the feed speed of the starting preform 1a by the preform feed means.

A downstream diameter gauge 25 for measuring the outside diameter (downstream diameter) of the taper portion 1b at the position P2 is placed at the downstream measurement position P2. The downstream diameter gauge 25 is comprised of a light emitting device 26 such as a laser beam source or the like, and a light receiving device 27 placed on the opposite side to the light emitting device 26 with the taper portion 1b in between. An output signal from the light receiving device 27 is supplied to a processing unit 28. Then the processing unit 28 calculates a measured downstream diameter D2 as a measured value of the downstream diameter of the taper portion 1b at the downstream measurement position P2, based on the signal from the light receiving device 27.

The measured downstream diameter D2 calculated at the processing unit 28 is further fed into a take-up speed controller 29. In this take-up speed controller 29, a target downstream diameter D20 is preliminarily set as a target outside diameter of the taper portion 1b at the downstream measurement position P2 on the other hand. The take-up speed controller 29 compares the measured downstream diameter D2 with the target downstream diameter D20 thus set and provides instructions to the preform take-up driver 14, based on the deviation (D2 - D20), thereby controlling the take-up speed of the elongated preform 1c by the preform take-up means.

In the optical fiber preform elongating apparatus and the elongating method using it according to the present embodiment, the target outside diameters D10, D20 are preliminarily given for the measurement positions P1, P2 set at the two locations of the taper portion 1b and the diameter measurements at the upstream and downstream positions are combined with the controls of the feed speed of the preform from upstream and the take-up speed to downstream thereof as described above, whereby the time lag of control is reduced over the outside diameter of the resultant elongated preform 1c. Accordingly, it becomes feasible to control the outside diameter in a good response and with accuracy.

Concerning the target outside diameters at the measurement positions P1, P2, it is preferable herein to set each of the target upstream diameter D10 and the target downstream diameter D20, based on the outside diameter of the starting preform 1a and the target outside diameter (desired outside diameter) for the elongated preform 1c. This makes it feasible to determine the taper shape of the taper portion 1b assumed as a shape of the preform 1 during the elongating process, so that the outside diameters of the taper portion 1b and the elongated preform 1c can be always controlled in good order, using outside diameter values at the measurement positions P1, P2 calculated from the taper shape, as the target outside diameters.

Further, it is preferable to set each of the target upstream diameter D10 and the target downstream diameter D20, based on the composition of the optical fiber preform 1. This allows each outside diameter to be controlled well, while taking account of the fact that the taper shape of the preform 1 during the elongating process differs depending upon the composition of the fiber preform.

A preferred configuration and others of the optical fiber preform elongating method and elongating apparatus according to the above-stated embodiment will be described below with specific examples thereof. The description below will follow such notation that Da denotes the outside diameter of the starting preform 1a, V1 the feed speed of the starting preform 1a at the preform feed means, Dc the target outside diameter for the elongated preform 1c, and V2 the take-up speed of the elongated preform 1c at the preform take-up means.

First, an optical fiber preform was preliminarily elongated using the elongating apparatus shown in Fig. 1, in order to set the target outside diameters of the preform 1 at the respective measurement positions P1, P2. In this process, the elongating was carried out at a feed speed and a take-up speed both fixed, without control of the preform feed speed and take-up speed based on the outside diameter measurements.

Prepared as the starting preforms 1a were preforms each having the outside diameter Da, which was a predetermined outside diameter in the range of $\phi$ 65 to 102 mm and uniform outside diameter in the longitudinal direction. The elongating conditions were that the heater temperature of the heater 15 used for in the heating of the preform 1 was 1890°C, the feed speed V1 of the starting preform 1a from the upper chuck 11 was 3 mm/min, and the target outside diameter Dc of the elongated preform 1c resulting from the elongating was φ 40 mm. In this case, the take-up speed V2 of the elongated preform 1c to the lower chuck 13 is determined by the equation below.

$$V2 = (Da/Dc)^2 \times V1$$

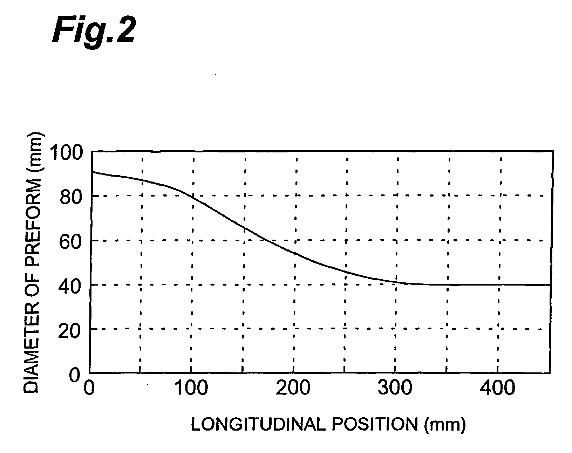

The elongating process of the optical fiber preform 1 was conducted under the above conditions. In the middle of the elongating process, the heater 15 was deactivated and the elongating step was stopped. Then the preform 1 was taken out and the taper shape of the taper portion 1b in the middle of the elongating process was checked. An example of diameter data of the resultant taper shape is presented in Fig. 2. In this graph of Fig. 2, the axis of abscissas represents positions (mm) along the longitudinal direction while the axis of ordinates does outside diameters (mm) at respective positions of the preform 1. Fig. 2 shows variation in outside diameters of the preform 1 in the taper portion 1b.

The taper shape of the preform 1, e.g., the length of the taper portion 1b, is dependent upon the heating range by the heater 15, the feed speed of the preform, and so on. Therefore, for carrying out the elongating of the optical fiber preform in practice, it is preferable to check the taper shape including the length of the taper portion 1b with each elongating apparatus and set the preferred preform feed speed, measurement positions P1, P2 for placement of the diameter gauges 20, 25, etc., based on the data. This can prevent unpreferred setting, e.g., such setting that the downstream measurement position P2 is located downstream of the complete end (or the downstream end) of the taper portion 1b.

Further, as to a plurality of diameter data from the check of the taper shape of the taper portion 1b, the diameter data was arranged for each position in the longitudinal direction in the taper portion 1b and a correlation was investigated between diameters at the two positions. Based on these results, the downstream measurement position P2 on the downstream end side was first set at a position 20 mm before the position of the complete end of the taper portion 1b in the case of elongating of the starting preform 1a having the minimum outside diameter Da of φ 65 mm.

As described above, among the two measurement positions included in the taper portion 1b, the downstream measurement position P2 is preferably set at the predetermined position near the complete end of the taper portion 1b. Since this setting locates the downstream measurement position P2 at the position as close to the elongated preform 1c as possible, the correlation becomes stronger between the downstream diameter D2 at the position P2 and the resultant diameter of the elongated preform 1c, so as to become able to control the outside diameter of the elongated preform 1c securely.

The target downstream diameter D20 for the downstream measurement position P2 can be set with reference to the diameter data shown in Fig. 2 and others. The position of the complete end (downstream end) of the taper portion 1b refers to a longitudinal position where the outside diameter substantially reaches the target outside diameter Dc (φ 40 mm in the present example) of the elongated preform 1c.

On the other hand, the upstream measurement position P1 is determined relative to the downstream measurement position P2 previously set, in consideration of correlation with the downstream outside diameter D2, of outside diameters at respective positions upstream of the position P2 in the longitudinal direction; it is preferable to select a position exhibiting the best correlation with the downstream outside diameter D2 and set it as the upstream measurement position P1. This makes it feasible to control the outside diameter of the elongated preform 1c with satisfactory accuracy.

As for the target upstream diameter D10 for the upstream measurement position P1, it is preferably set based on the target downstream diameter D20 previously set and on the correlation of the upstream diameter D1 with the downstream diameter D2. This, together with the aforementioned setting of the measurement positions, makes it feasible to control the outside diameter of the elongated preform 1c with satisfactory accuracy.

The settings of the upstream measurement position P1, target upstream diameter D10, and target downstream diameter D20 will be described in further detail. The downstream measurement position P2 is set at the position 20 mm before the position of the lower end of the taper portion 1b in the elongating case of the starting preform 1a with the minimum outside diameter Da of φ 65 mm, as described above.

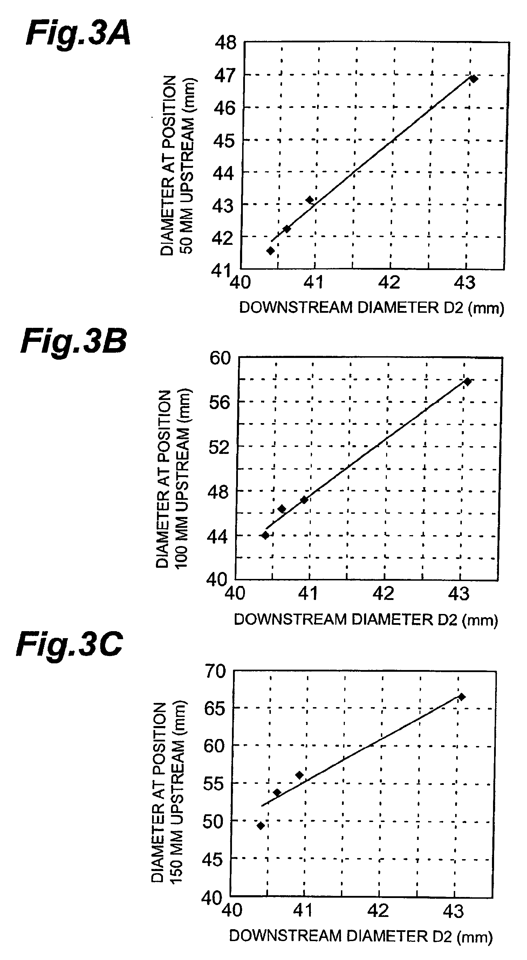

First, the taper shape of the taper portion 1b and change thereof during the elongating process were investigated with four starting preforms 1a whose outside diameters Da were in the range of φ 65 to 97 mm. Figs. 3A to 3C show correlations between outside diameters at respective positions of the taper portion 1b upstream of the downstream measurement position P2 and downstream diameters D2 at the downstream measurement position P2. In these graphs of Figs. 3A to 3C, the axis of abscissas represents the downstream diameters D2 (mm) at the downstream measurement position P2 and the axis of ordinates the outside diameters (mm) at the respective positions upstream of the downstream measurement position.

Among these graphs, Fig. 3A shows the correlation between outside diameters of the preform 1 at the position 50 mm upstream of the position P2, and the downstream diameters D2. Fig. 3B shows the correlation between outside diameters of the preform 1 at the position 100 mm upstream of the position P2, and the downstream diameters D2. Fig. 3C shows the correlation between outside diameters of the preform 1 at the position 150 mm upstream of the position P2, and the downstream diameters D2. In each of these graphs, a diameter correlation line obtained by linear approximation is illustrated together with the measured diameter data.

It was found from these diameter data and results of the linear approximation calculation thereof that with variation in the outside diameter Da of the starting preform 1a, an upstream position demonstrating the best correlation of outside diameters with the downstream diameter D2 at the downstream measurement position P2, which was specifically a position where the correlation of outside diameters with the downstream diameter D2 was closest to a straight line, was the position 100 mm upstream of the downstream measurement position P2 (Fig. 3B). Based on this result, the position 100 mm upstream of the position P2 was set as the upstream measurement position P1.

For these upstream measurement position P1 and downstream measurement position P2, each of the target upstream diameter D10 and the target downstream diameter D20 used in the control of the taper shape of the taper portion 1b is set on the basis of the upstream measurement position P1 and downstream measurement position P2 thus set, the outside diameter Da of the starting preform 1a as an object to be elongated, the diameter data obtained by preliminary elongating as described above, and so on.

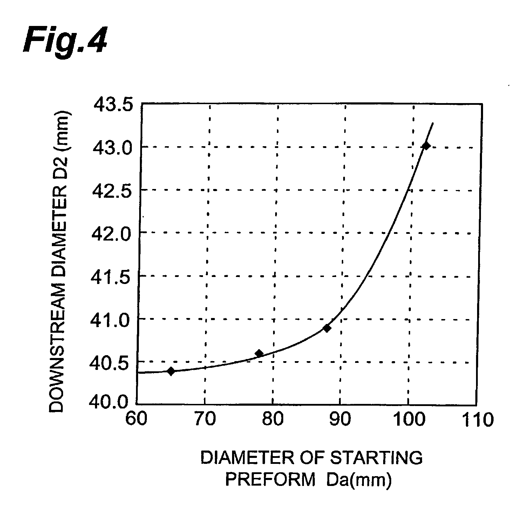

First, the target downstream diameter D20 for the downstream diameter D2 of the taper portion 1b at the downstream measurement position P2 is preferably set on the basis of the correlation between the outside diameters Da of the starting preform 1a and the downstream diameters D2, obtained from the diameter data shown in Fig. 2 and others. The correlation between the downstream diameters D2 and the outside diameters Da of the starting preform 1a obtained in the present example is presented in the graph of Fig. 4.

In this graph of Fig. 4, the axis of abscissas represents the outside diameters Da (mm) of the starting preform 1a and the axis of ordinates the downstream diameters D2 (mm) at the downstream measurement position P2 of the taper portion 1b. The target downstream diameter D20 is determined from a value of the outside diameter Da of the starting preform 1a as an object to be elongated, based on the correlation shown in this graph.

The target upstream diameter D10 for the upstream diameter D1 of the taper portion 1b at the upstream measurement position P1 is preferably set on the basis of the target downstream diameter D20 previously set and the diameter correlation line of the correlation between upstream diameters D1 and downstream diameters D2 shown in Fig. 3B.

By the above-stated settings and setting method, the elongating process of the optical fiber preform was actually conducted using as the starting preform 1a a preform having the average outside diameter Da of 88 mm and the diameter variation of about 4 mm in the longitudinal direction. The upstream measurement position P1 and downstream measurement position P2 were set as described above.

The target downstream diameter D20 at the downstream measurement position P2 was set as the target downstream diameter D20 = 40.9 mm from the outside diameter Da of the starting preform 1a = 88 mm, based on the correlation curve shown in Fig. 4. The target upstream diameter D10 at the upstream measurement position P1 was determined in such a way that D20 = 40.9 mm was substituted into the following linear approximate equation of the diameter correlation line shown in Fig. 3B:

$$D1 = 4.9651 \times D2 - 155.9,$$

yielding the target upstream diameter D10 = 47.2 mm.

With application of the above settings, the elongating of the optical fiber preform was conducted under the elongating conditions that the heater temperature of the heater 15 was 1880°C, the initial feed speed of the starting preform 1a V10 = 5 mm/min, and the initial take-up speed of the elongated preform 1c V20 = 23.1 mm/min.

The controls of the preform feed speed V1 and take-up speed V2 by the measured upstream diameter D1 at the upstream measurement position P1 and the measured downstream diameter D2 at the downstream measurement position P2 were carried out according to the speed controls using the control equations below, based on the above-stated respective initial speeds V10 and V20 and deviations (D1 - D10) and (D2 - D20) of the outside diameters:

$$V1 = V10 + A1 \times (D1 - D10)$$

$$V2 = V20 + A2 \times (D2 - D20).$$

Here the coefficients A1 and A2 in the above control equations are factors for making the speed controls reflect the deviations of the outside diameters at the respective measurement positions P1 and P2.

In the present example, specifically, the controls were carried out using A1 = 5(/min) and A2 = 50(/min). As a result, it was verified that the elongated preform 1c resulting from the elongating had the diameter variation range of about 0.08 mm in the longitudinal direction and that the starting preform was thus elongated into the elongated preform 1c of extremely uniform diameter. This was because it became feasible to control the outside diameter in good response and with small time lag, by feeding the deviation (D1 - D10) of the outside diameter at the upstream measurement position P1 back to the preform feed speed V1 at the upstream position and feeding the deviation (D2 - D20) of the outside diameter at the downstream measurement position P2 back to the preform take-up speed V2 at the downstream position as described above.

It was found as to the control coefficients A1 and A2 in the above control equations that when the values of A1 and A2 exceeded 50 and 500, respectively, the speed control width became too large and the resultant elongated preform 1c had nonuniform diameters. Accordingly, these coefficients A1 and A2 are preferably set as values in the range of not more than 50 (/min) and in the range of not more than 500 (/min), respectively.

The values of these coefficients A1, A2 and the combination thereof are preferably determined so as to attain the best control conditions in consideration of the elongating conditions including the outside diameter Da of the starting preform 1a to be elongated, the target outside diameter Dc of the elongated preform 1c, the heater temperature of the heater 15, the length of the heater 15, and so on. It is also preferable to set them with consideration to mutual influence between the controls of the preform feed speed V1 and take-up speed V2.

Japanese Patent Applications Laid-Open No. H05-147971 and Laid-Open No. H08-91861 describe the elongating methods of carrying out the outside diameter control with a plurality of diameter gauges set against the taper portion of the optical fiber preform in the elongating process, but the methods described in these documents failed to attain the satisfactory elongating accuracy.

Specifically, the elongating method described in Laid-Open No. H05-147971 is configured to measure the outside diameter immediately after the start of the taper portion and the outside diameter immediately before the end thereof, determine a target value of the outside diameter immediately before the end from the measured value of the outside diameter immediately after the start, and control the outside diameter on the basis of the target value thus determined. However, since the target outside diameter for the taper portion is not fixed in this method, the control method is complex. It is also difficult to eliminate the influence of the time lag of travel from the position immediately after the start of the taper portion to the position immediately before the end thereof.

In the elongating method described in Laid-Open No. H08-91861, a plurality of diameter gauges are provided for the taper portion to measure outside diameters at the respective positions, the taper shape of the taper portion i.s approximated to a straight line, and the diameter control is carried out so as to keep the slope of the straight line constant. However, since the actual taper shape in the taper portion of the preform is not a straight line, it is impossible to perform the diameter control with accuracy by the control method based on the assumption of the straight taper shape. The absolute value of the outside diameter is controlled using an average of outside diameters measured at two positions, but this does not implement the accurate diameter control, either, where the taper shape is not straight.

In contrast to them, the elongating method and elongating apparatus according to the present invention are configured to preliminarily provide the fixed target diameters for the two measurement positions set against the taper portion and control each of the preform feed speed and take-up speed, based on the upstream diameter and downstream diameter. This minimizes the time lag of the control over the outside diameter of the elongated preform and permits the diameter control in good response and with accuracy.

If the starting preform as an object to be elongated has diameter variation in the longitudinal direction, there will also occur variation in the outside diameter distribution in the taper portion of the preform during the elongating process. In this case, in order to keep the outside diameter of the resultant elongated preform uniform, it is important to keep the outside diameter distribution of the taper portion constant. For this purpose, it is conceivable to measure all the outside diameters at the respective positions of the taper portion and perform the diameter control based thereon. It is, however, difficult in practice to employ such a configuration from facility constraints and others.

In contrast, the elongating method and elongating apparatus according to the present invention permit the efficient diameter control by the configuration wherein the two measurement positions are set in the preferred combination for control of the diameter distribution of the taper portion and wherein the outside diameters are measured at the respective upstream measurement position and downstream measurement position.

The optical fiber preform elongating method and elongating apparatus according to the present invention are not limited to the aforementioned embodiment and example, but can be modified in various forms. For example, as to the settings of the measurement positions P1, P2 and the target diameters D10, D20, it is also preferable to set them by a setting method suitable for specific conditions in each elongating apparatus, in addition to the aforementioned setting example. Concerning the control equations for feedback of the deviations between measured diameter and target diameter, the linear control equations in the above example are just an example, and it is also possible to employ equations of other forms.

The optical fiber preform elongating method and elongating apparatus according to the present invention can be utilized as the optical fiber preform elongating method and elongating apparatus with improved elongating accuracy of the optical fiber preform and with improved productivity, as detailed above. Namely, it becomes feasible to reduce the time lag of the control over the outside diameter of the elongated preform and control the outside diameter with accuracy, by the optical fiber preform elongating method and elongating apparatus wherein the outside diameters are measured at the two locations of the upstream measurement position and the downstream measurement position for the taper portion of the preform in the elongating process, the target diameters are set for the two locations, and the preform feed speed and take-up speed are controlled respectively based on the diameter deviations at the upstream measurement position and at the downstream measurement position.

This permits the preform to be elongated with satisfactory elongating accuracy even if the size of the optical fiber preform is increased for the purpose of enhancing the productivity of optical fibers and optical fiber preforms. Since the production cost of the optical fiber preforms is reduced, it becomes feasible to enhance the productivity thereof effectively.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. An optical fiber preform elongating method of heating and softening one end of a starting preform fed from preform feed means, by heating means, elongating the softened preform into a desired outside diameter, and taking up the resultant elongated preform by preform take-up means, comprising:

    setting an upstream measurement position included in a taper portion between said starting preform and said elongated preform where outside diameters vary along a longitudinal direction, and setting a downstream measurement position included in said taper portion and located downstream of said upstream measurement position in the longitudinal direction; comparing a measured upstream diameter of said taper portion at said upstream measurement position with a set target upstream diameter and controlling a feed speed of said starting preform from said preform feed means, based on a deviation between the measured diameter and the target diameter; and comparing a measured downstream diameter of said taper portion at said downstream measurement position with a set target downstream diameter and controlling a take-up speed of said elongated preform at said preform take-up means, based on a deviation between the measured diameter and the target diameter.

2. The optical fiber preform elongating method according to Claim 1, wherein each of said target upstream diameter and said target downstream diameter is set based on an outside diameter of said starting preform and a target outside diameter for the elongated preform.

3. The optical fiber preform elongating method according to Claim 1, wherein each of said target upstream diameter and said target downstream diameter is set based on a composition of said optical fiber preform.

4. The optical fiber preform elongating method according to Claim 1, wherein said downstream measurement position is set at a predetermined position near a complete end of said taper portion and, relative to said downstream measurement position previously set, said upstream measurement position is set in consideration of a correlation with said downstream outside diameter, of diameters at respective positions upstream of said downstream measurement position in the longitudinal direction.

5. The optical fiber preform elongating method according to Claim 1, wherein said target upstream diameter is set based on said target downstream diameter previously set and on a correlation of said upstream outside diameter with said downstream outside diameter.

6. An optical fiber preform elongating apparatus for heating and softening one end of a starting preform fed from preform feed means, by heating means, elongating the softened preform into a desired outside diameter, and taking up the resultant elongated preform by preform take-up means, comprising:

    upstream diameter measuring means for, for a taper portion between said starting preform and said elongated preform where outside diameters vary along a longitudinal direction, measuring an upstream outside diameter of said taper portion at an upstream measurement position included in said taper portion; downstream diameter measuring means for measuring a downstream outside diameter of said taper portion at a downstream measurement position included in said taper portion and located downstream of said upstream measurement position in the longitudinal direction; feed speed control means for comparing a measured upstream diameter of said taper portion at said upstream measurement position with a set target upstream diameter and controlling a feed speed of said starting preform from said preform feed means, based on a deviation between the measured diameter and the target diameter; and

take-up speed control means for comparing a measured downstream diameter of said taper portion at said downstream measurement position with a set target downstream diameter and controlling a take-up speed of said elongated preform at said preform take-up means, based on a deviation between the measured diameter and the target diameter.

7. The optical fiber preform elongating apparatus according to Claim 6, wherein each of said target upstream diameter and said target downstream diameter is set based on an outside diameter of said starting preform and a target outside diameter for the elongated preform.

8. The optical fiber preform elongating apparatus according to Claim 6, wherein each of said target upstream diameter and said target downstream diameter is set based on a composition of said optical fiber preform.

9. The optical fiber preform elongating apparatus according to Claim 6, wherein said downstream measurement position is set at a predetermined position near a complete end of said taper portion and, relative to said downstream measurement position previously set, said upstream measurement position is set in consideration of a correlation with said downstream outside diameter, of diameters at respective positions upstream of said downstream measurement position in the longitudinal direction.

10. The optical fiber preform elongating apparatus according to Claim 6, wherein said target upstream diameter is set based on said target downstream diameter previously set and on a correlation of said upstream outside diameter with said downstream outside diameter.

# Fig.1

EP 1 245 543 A2

# *Fig.2*

**Fig.3A**

**Fig.3B**

**Fig.3C**

## *Fig.4*